# EUROPEAN PATENT APPLICATION

(11) **EP 3 278 913 A1**
(43) Date of publication of application: **07.02.2018**
(21) Application number: 16772545.6
(22) Date of filing: 24.03.2016
(51) Int. Cl.: B23C 5/12, B23C 5/10

(54) **FORMED END MILL**

(30) Priority: 31.03.2015 JP 2015071435
(71) Applicant: Mitsubishi Materials Corporation, Chiyoda-ku Tokyo 100-8117 (JP)
(72) Inventor: AZEGAMI, Takayuki, Tokyo 100-8117 (JP)
(74) Representative: Hoffmann Eitle
(86) International application number: PCT/JP2016/059373
(87) International publication number: WO 2016/158664

(57) **Abstract**

In a formed end mill, a peripheral cutting edge has a smaller-diameter cutting part and a larger-diameter cutting part. An imaginary line obtained by lining up a deepest point of a flute bottom of a chip discharge flute, which appears in a cross-sectional view perpendicular to an axis of an end mill body, in an extending direction of the chip discharge flute is defined as a virtual flute bottom line. A flute helix angle, which is formed between the virtual flute bottom line and the axis, in a side view when the end mill body is seen from a radial direction orthogonal to the axis, is 0 degrees or more at a distal end part of the chip discharge flute in the axial direction, and increases gradually from the distal end part toward a posterior end in the axial direction.

## Description

### Technical Field

The present invention relates to a formed end mill used for machining of a special shape.

Priority is claimed on Japanese Patent Application No. 2015-071435, filed March 31, 2015, the content of which is incorporated herein by reference.

### Background Art

In the related art, for example, formed end mills (formed cutters), such as dovetail formed milling cutters or Christmas tree formed milling cutters, which are used for machining of a special shape, are known.

The formed end mills have a shank portion to be mounted on a main spindle of a machine tool, or the like, and a cutting edge portion that is arranged closer to a distal end in an axial direction than the shank portion and has a peripheral cutting edge with a special shape cut in a workpiece formed therein.

Specifically, the formed end mills include an end mill body, a chip discharge flute, and a peripheral cutting edge. The end mill body has a smaller-diameter part and a larger-diameter part with a larger external diameter than the smaller-diameter part adjacent to each other in the axial direction, and is rotated around an axis. The chip discharge flute is formed at an outer periphery of the end mill body, and extends gradually toward an opposite to a tool rotational direction around the axis as it goes from a distal end toward a posterior end in the axial direction. The peripheral cutting edge is formed at an intersection ridgeline between a wall surface of the chip discharge flute that faces the tool rotational direction, and an outer peripheral surface of the end mill body.

Additionally, the peripheral cutting edge has a smaller-diameter cutting part located at the smaller-diameter part of the end mill body, and a larger-diameter cutting part located at the larger-diameter part.

For example, in a formed end mill described in the following Patent Document 1, in a side view when an end mill body is seen from a radial direction orthogonal to an axis, an angle at which a chip discharge flute is inclined with respect to the axis is made constant (that is, equal lead) in an extending direction of this chip discharge flute. In the following description, the above angle is referred to as a "flute helix angle". This chip discharge flute is an equal lead helical flute.

Additionally, in formed end mills described in the following Patent Documents 2 and 3, a chip discharge flute is an oblique cutting edge flute. The "oblique cutting edge flute" is a flute formed by slidably moving a grinding stone in an extending direction of the chip discharge flute with respect to an end mill body without rotating the end mill body around an axis, when the chip discharge flute is shaped by grinding at the time of manufacturing the end mills.

### Citation List

### Patent Literature

[Patent Document 1] Japanese Unexamined Patent Application, First Publication No. 2010-89193
[Patent Document 2] Japanese Unexamined Patent Application, First Publication No. 2012-81557
[Patent Document 3] Japanese Unexamined Patent Application, First Publication No. 2012-81558

### Summary of Invention

### Technical Problem

However, the above related-art formed end mills have the following problems.

If the flute helix angle of the chip discharge flute is constant in the extending direction of this chip discharge flute as in Patent Document 1, generally, a cutting edge inclination angle of the peripheral cutting edge becomes smaller in the smaller-diameter cutting part than in the larger-diameter cutting part. The above cutting edge inclination angle is equivalent to a helix angle of the peripheral cutting edge, that is, is an angle at which the peripheral cutting edge is inclined with respect to the axis.

Additionally, when the chip discharge flute is shaped by grinding at the time of manufacturing the end mill, it is necessary to make a grindstone swing angle of the grinding stone larger than the flute helix angle of the chip discharge flute. For example, Japanese Unexamined Patent Application, First Publication No. 2006-297534 can be referred to regarding the above grindstone swing angle.

For this reason, the wall surface (the rake face of the peripheral cutting edge) of the chip discharge flute that faces the tool rotational direction forms a concavely curved shape with a large curvature (a small curvature radius) in a sectional view (cross-sectional view) perpendicular to the axis of the end mill body. In connection with this, the radial rake angle (peripheral rake angle) of the peripheral cutting edge becomes small in the smaller-diameter cutting part than in the larger-diameter cutting part. That is, the radial rake angle of the peripheral cutting edge becomes larger to a negative angle side in the smaller-diameter cutting part than in the larger-diameter cutting part.

In this way, if the cutting edge inclination angle or the radial rake angle of the smaller-diameter cutting part becomes small (becoming large to the negative angle side), the sharpness of the smaller-diameter cutting part is not easily secured compared to that of the larger-diameter cutting part. As a result, wear, breakage, or the like is apt to occur in this smaller-diameter cutting part. Thus, in Patent Document 1, two rake faces of the chip discharge flute are provided. Accordingly, the sharpness of the smaller-diameter cutting part is enhanced, and occurrences of wear, breakage, or the like are reduced.

However, since the two rake faces are provided in the chip discharge flute, a grinding process at the time of manufacturing the end mill is increased, and manufacturing becomes complicated.

Additionally, if the chip discharge flute is the oblique cutting edge flute as in Patent Documents 2 and 3, the cutting edge inclination angles of the smaller-diameter cutting part and the larger-diameter cutting part can be the same angles as each other. Meanwhile, regarding the radial rake angle, the angle of a cutting part located on the distal end side of the peripheral cutting edge in the axial direction becomes smaller (that is, become larger to the negative angle side) than that of a cutting part located on the posterior end side (shank portion side) of the peripheral cutting edge in the axial direction. As a result, it becomes difficult to secure sharpness. For this reason, wear, breakage, or the like is apt to occur in the cutting part located on the distal end side in the peripheral cutting edge.

The invention has been made in view of such circumstances, and an object thereof is to provide a formed end mill that can enhance both the sharpness of a smaller-diameter cutting part and a larger-diameter cutting part of an peripheral cutting edge without complicating manufacturing processes at the time of manufacturing the end mill, and can effectively reduce wear, breakage, or the like of the peripheral cutting edge.

### Solution to Problem

A formed end mill related to one aspect of the invention includes an end mill body that has a smaller-diameter part and a larger-diameter part with a larger external diameter than the smaller-diameter part arranged adjacent to each other in an axial direction and is rotated around an axis; a chip discharge flute that is formed at an outer periphery of the end mill body and extends gradually toward an opposite to a tool rotational direction around the axis as it goes from a distal end toward a posterior end in the axial direction; and a peripheral cutting edge that is formed at an intersection ridgeline between a wall surface of the chip discharge flute that faces the tool rotational direction, and an outer peripheral surface of the end mill body. The peripheral cutting edge has a smaller-diameter cutting part located in the smaller-diameter part, and a larger-diameter cutting part located in the larger-diameter part. An imaginary line obtained by lining up a deepest point of a flute bottom of the chip discharge flute, which appears in a cross-sectional view perpendicular to the axis of the end mill body, in an extending direction of the chip discharge flute is defined as a virtual flute bottom line. An angle of an acute angle out of the acute angle and an obtuse angle formed between the virtual flute bottom line and the axis, in a side view when the end mill body is seen from a radial direction orthogonal to the axis, is defined as a flute helix angle. The flute helix angle is 0 degrees or more at a distal end part of the chip discharge flute in the axial direction, and increases gradually from the distal end part toward a posterior end in the axial direction.

According to the formed end mill of the invention, in the side view when the end mill body is seen from the radial direction orthogonal to the axis, the "flute helix angle" that is the angle of the acute angle out of the acute angle and the obtuse angle, which are formed between the virtual flute bottom line extending along the flute bottom of the chip discharge flute and the axis (or a linear line parallel to the axis) is 0 degrees or more in the distal end part of the chip discharge flute. For this reason, the cutting edge inclination angle of the peripheral cutting edge can be set to a positive angle side in a cutting part (the smaller-diameter cutting part or larger-diameter cutting part) closest to a distal end in the peripheral cutting edge.

In addition, the "peripheral cutting edge" is a cutting edge formed at the intersection ridgeline between the wall surface (rake face) of the chip discharge flute that faces the tool rotational direction, and the outer peripheral surface (flank face) of the end mill body. In a case where a gash is formed in the distal end part of the chip discharge flute, an end cutting edge (a tip cutting edge) that is located at a distal end edge of this gash and extends in the radial direction is not included in the above "peripheral cutting edge".

Additionally, the "cutting edge inclination angle" indicates the angle of the acute angle out of the acute angle and the obtuse angle, which are formed between the peripheral cutting edge and the axis (or the linear line parallel to the axis), in the side view when the end mill body is seen from the radial direction orthogonal to the axis. The cutting edge inclination angle is equivalent to the helix angle of the peripheral cutting edge.

The flute helix angle of the chip discharge flute increases gradually from the distal end part of the chip discharge flute toward the posterior end in the direction of the axis. That is, the chip discharge flute includes the unequal lead helical flute in which the flute helix angle becomes gradually larger from the distal end in the direction of the axis toward the posterior end.

By including such a special configuration of the invention, the following remarkable effects are exhibited.

That is, for example, in the smaller-diameter cutting part of a first valley (a first smaller-diameter part from the distal end) located closer to the posterior end than the larger-diameter cutting part of a first peak (a first larger-diameter part from the distal end) closest to the distal end in the end mill body, the cutting edge inclination angle can be easily set large (large to the positive angle side). Therefore, a situation where the sharpness of the peripheral cutting edge decreases in the smaller-diameter cutting part more than in the larger-diameter cutting part can be avoided, and occurrences of wear, breakage, or the like in the smaller-diameter cutting part can be markedly reduced. Additionally, as the entire peripheral cutting edge, it is possible to limit variations and deviations of the cutting force.

Additionally, when the chip discharge flute is shaped by grinding at the time of manufacturing the end mill, a desired shape can be imparted through a single grinding process.

Moreover, when the chip discharge flute is grounded, it is possible to bring the grindstone swing angle of a grinding stone close to the flute helix angle of the chip discharge flute or it is possible to make the grindstone swing angle equal to the flute helix angle. For this reason, the wall surface (the rake face of the peripheral cutting edge) of the chip discharge flute that faces the tool rotational direction forms a concavely curved shape with a small curvature (a large curvature radius) or a linear shape in the sectional view (cross-sectional view) perpendicular to the axis of the end mill body.

Accordingly, the radial rake angle of the peripheral cutting edge becomes an approximated angle that is not greatly different between the smaller-diameter cutting part and the larger-diameter cutting part adjacent to each other in the direction of the axis. That is, the radial rake angle of the smaller-diameter cutting part can be prevented from becoming excessively larger to a negative angle side than the radial rake angle of the larger-diameter cutting part as in the related art. In the entire peripheral cutting edge (the smaller-diameter cutting part and the larger-diameter cutting part), the radial rake angle can be easily set to the positive angle side.

Therefore, a situation where the sharpness of the peripheral cutting edge decreases in the smaller-diameter cutting part more than in the larger-diameter cutting part can be avoided, and occurrences of wear, breakage, or the like in the smaller-diameter cutting part can be markedly reduced. Additionally, as the entire peripheral cutting edge, it is possible to reduce variations and deviations of the cutting force.

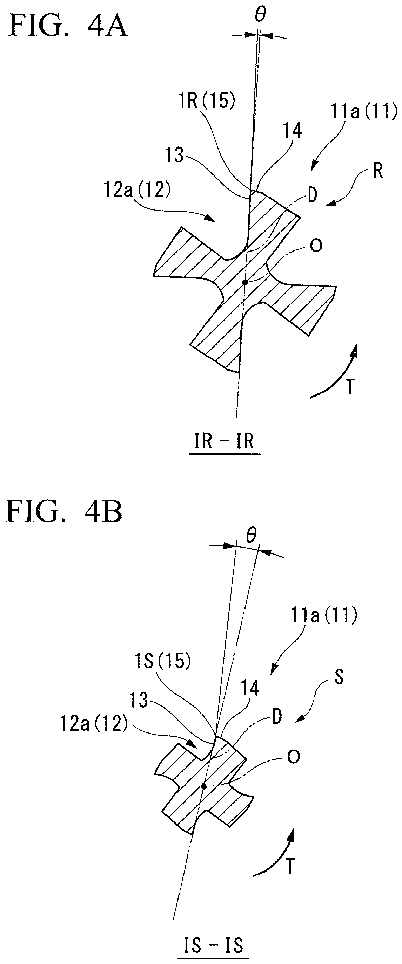

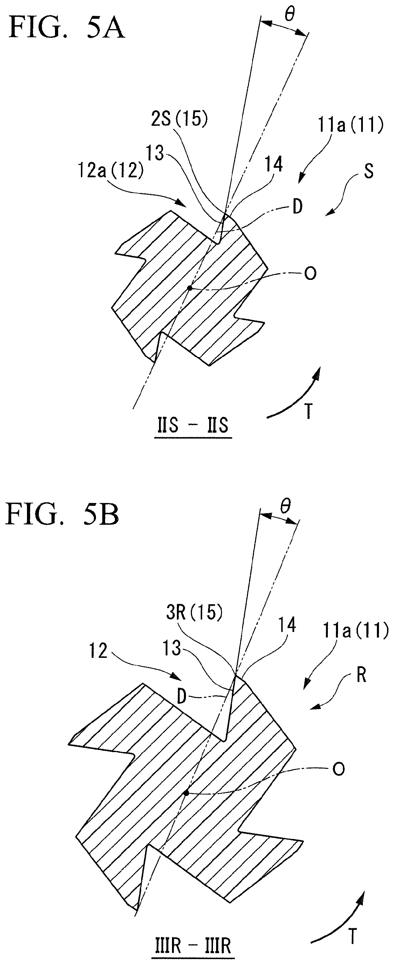

In addition, the "radial rake angle of the peripheral cutting edge" is angles shown by symbol θ in FIGS. 4A to 4C, 5A, and 5B. Specifically, the radial rake angle of the peripheral cutting edge indicates the angle of an acute angle out of the acute angle and an obtuse angle, which are formed between a predetermined radial direction (equivalent to a so-called "tool reference plane") passing through the peripheral cutting edge in the radial direction orthogonal to the axis and the rake face (a wall surface portion of the chip discharge flute adjacent to the peripheral cutting edge, which faces the tool rotational direction) of the peripheral cutting edge, in a cross-sectional view perpendicular to the axis of the end mill body.

Additionally, the radial rake angle θ being the positive angle is an angle θ when the rake face of the peripheral cutting edge extends in an inclined manner in the tool rotational direction toward the radial outer side in the cross-sectional view of the end mill body. In addition, in this case, the rake face of the peripheral cutting edge is arranged on the side (tool counter-rotational direction) opposite to the tool rotational direction with respect to the above predetermined radial direction (tool reference plane).

From above, according to the invention, both the sharpness of the smaller-diameter cutting part and the larger-diameter cutting part of the peripheral cutting edge can be enhanced without complicating manufacturing processes at the time of manufacturing the end mill, and wear, breakage, or the like of the peripheral cutting edge can be effectively reduced. Accordingly, the tool lifespan can be extended.

Additionally, in the above formed end mill, it is preferable that the peripheral cutting edge has at least one or more smaller-diameter cutting parts and at least one or more larger-diameter cutting parts, an angle of an acute angle out of the acute angle and an obtuse angle formed between the peripheral cutting edge and the axis, in the side view when the end mill body is seen from the radial direction orthogonal to the axis, is defined as a cutting edge inclination angle, and the cutting edge inclination angle of the smaller-diameter cutting part arranged adjacent to the posterior end of the larger-diameter cutting part in the axial direction is made larger than a cutting edge inclination angle of the larger-diameter cutting part located closest to a distal end in the axial direction out of the smaller-diameter cutting part and the larger-diameter cutting part.

In this case, the cutting edge inclination angle is made larger (larger to the positive angle side) in the smaller-diameter cutting part of the first valley arranged adjacent to the posterior end than the larger-diameter cutting part of the first peak closest to the distal end. Therefore, a situation where sharpness decreases particularly in the smaller-diameter cutting part closest to the distal end in the peripheral cutting edge can be avoided. Accordingly, occurrences of wear, breakage, or the like in the smaller-diameter cutting part of the first valley closest to the distal end where wear, breakage, or the like is most likely to occur in the related art is especially and markedly reduced.

Additionally, in the above formed end mill, it is preferable that an angle of an acute angle out of the acute angle and an obtuse angle, which are formed between a predetermined radial direction passing through the peripheral cutting edge in the radial direction orthogonal to the axis, and a wall surface portion of the chip discharge flute adjacent to the peripheral cutting edge, which faces the tool rotational direction, in a cross-sectional view perpendicular to the axis of the end mill body, is defined as a radial rake angle of the peripheral cutting edge, and the radial rake angle of the peripheral cutting edge is 0 degrees or more and 15 degrees or less.

In this case, irrespective of the smaller-diameter cutting part and the larger-diameter cutting part, the radial rake angle (peripheral rake angle) of the peripheral cutting edge is 0 degrees or more over the entire peripheral cutting edge, and is set to the positive angle side. Accordingly, sharpness is enhanced over the entire peripheral cutting edge. In the related art, the radial rake angle tended to be set to the negative angle side in the smaller-diameter cutting part of the first valley closest to the distal end. Meanwhile, according to the above formed end mill, the radial rake angle is set to the positive angle side also in the smaller-diameter cutting part of the first valley. Thus, sharpness is sufficiently enhanced. Therefore, particularly, occurrences of wear, breakage, or the like at the smaller-diameter cutting part of this first valley are especially and markedly reduced.

Additionally, since the radial rake angle of the peripheral cutting edge is 15 degrees or less, the edge tip strength of the peripheral cutting edge and the rigidity of the end mill body can also be sufficiently secured while sufficiently enhancing sharpness as described above.

Additionally, in the above formed end mill, it is preferable that the chip discharge flute includes a curvilinearly grooved unequal lead helical flute part in which the flute helix angle becomes gradually larger from the distal end toward the posterior end in the axial direction, and a linearly grooved oblique cutting edge flute part lined up to a posterior end of the unequal lead helical flute part in the axial direction, the virtual flute bottom line of the unequal lead helical flute part and the virtual flute bottom line of the oblique cutting edge flute part are smoothly connected to each other.

That is, in this case, when the chip discharge flute is shaped by grinding at the time of manufacturing the end mill, the unequal lead helical flute part is first formed from the distal end of the chip discharge flute toward the posterior end by a grinding stone. In this grinding process (the same process), the oblique cutting edge flute part is formed subsequent to the posterior end of the unequal lead helical flute part. Accordingly, the chip discharge flute can be easily shaped in a single grinding process. Additionally, the grooved shape of the chip discharge flute can be finished with good external appearance.

Additionally, in the formed end mill, it is preferable that the peripheral cutting edge has a plurality of the smaller-diameter cutting parts, and the unequal lead helical flute part of the chip discharge flute extends from the distal end part in the axial direction to at least a position exceeding a predetermined smaller-diameter cutting part with a smallest external diameter among a plurality of the smaller-diameter cutting parts to the posterior end in the axial direction.

In this case, in the predetermined smaller-diameter cutting part with the smallest external diameter among the plurality of smaller-diameter cutting parts, the above-described working effects are reliably obtained. That is, in the predetermined (minimum diameter) smaller-diameter cutting part in which it is most difficult to secure sharpness in the related art and wear, breakage, or the like is most likely to occur, among the plurality of smaller-diameter cutting parts, sharpness is reliably enhanced by the formed end mill, and wear, breakage, or the like can be effectively reduced.

### Advantageous Effects of Invention

According to the formed end mill of the invention, both the sharpness of the smaller-diameter cutting part and the larger-diameter cutting part of the peripheral cutting edge can be enhanced without complicating the manufacturing processes at the time of manufacturing the end mill, and wear, breakage, or the like of the peripheral cutting edge can be effectively reduced.

### Brief Description of Drawings

FIG. 1 is a perspective view showing a formed end mill related to a first embodiment of the invention.
FIG. 2 is a side view showing the formed end mill of FIG. 1.
FIG. 3 is a front view showing the formed end mill of FIG. 1.
FIG. 4A is a view showing an IR-IR section of FIG. 2.
FIG. 4B is a view showing an IS-IS section of FIG. 2.
FIG. 4C is a view showing an IIR-IIR section of FIG. 2.
FIG. 5A is a view showing an IIS-IIS section of FIG. 2.
FIG. 5B is a view showing an IIIR-IIIR section of FIG. 2.
FIG. 6 is a perspective view of an imaginary columnar body obtained by cutting out the formed end mill of FIG. 1 in a columnar shape in conformity with the external diameter of a smaller-diameter part (minimum diameter part) of an end mill body.
FIG. 7A is a front view of the imaginary columnar body of FIG. 6.
FIG. 7B is a side view of the imaginary columnar body of FIG. 6.
FIG. 8 is a side view showing a formed end mill related to a second embodiment of the invention.
FIG. 9 is a front view showing the formed end mill of FIG. 8.

### Description of Embodiments

### <First Embodiment>

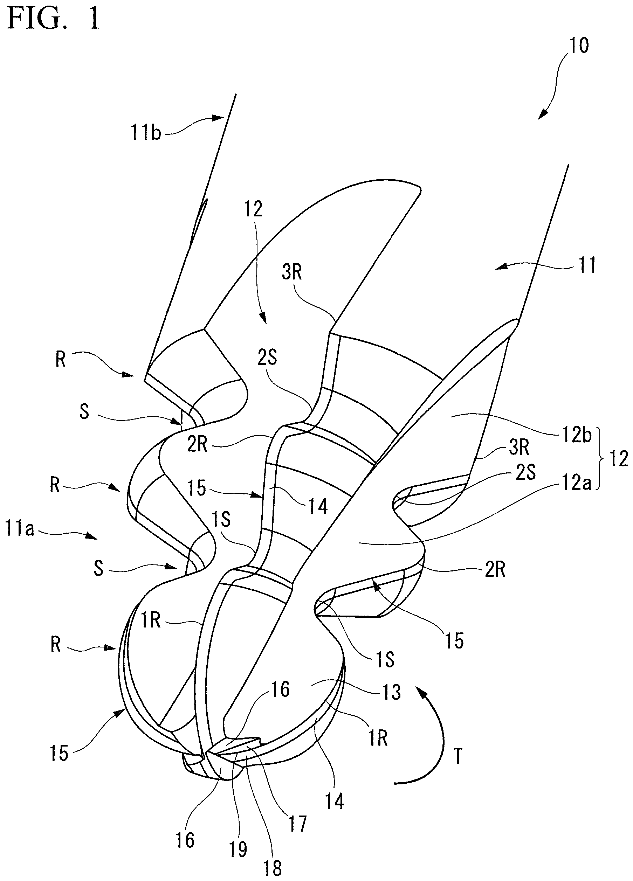

Hereinafter, a formed end mill 10 related to a first embodiment of the invention will be described with reference to FIGS. 1 to 7B.

### [Schematic configuration of formed end mill]

A formed end mill (formed cutter) 10 is, for example, a milling tool, such as a dovetail formed milling cutter or a Christmas tree formed milling cutter, which is used for machining of a special shape.

As shown in FIGS. 1 to 3, the formed end mill 10 has an end mill body 11 that forms a shaft shape.

A cutting edge portion 11a having a peripheral cutting edge 15 is formed at least at a distal end part in a direction of an axis O in the end mill body11. The cutting edge portion 11a makes cuts in a workpiece. The cutting edge portion 11a has a special shape. Additionally, a site (a site located closer to a posterior end in the direction of the axis O rather than the cutting edge portion 11a) other than the cutting edge portion 11a in the end mill body 11 is a shank portion 11b.

The shank portion 11b that forms a columnar shape in the end mill body 11 is detachably mounted on a main spindle or the like of a machine tool. The formed end mill 10 performs cutting (milling) of a workpiece made of a metallic material or the like by the end mill body 11 being rotated in a tool rotational direction T around the axis O. Additionally, the formed end mill 10 is fed in a direction intersecting the axis O together with the above rotation, to performing machining (grooving or the like) of a special shape in a workpiece with the cutting edge portion 11a.

In addition, the formed end mill 10 of the present embodiment exhibits remarkable working effects, in a case where this end mill is used for cutting of, for example, difficult-to-cut materials, such as an Ni-based alloy, even among workpieces.

### [Definitions of orientations (directions) used in the present specification]

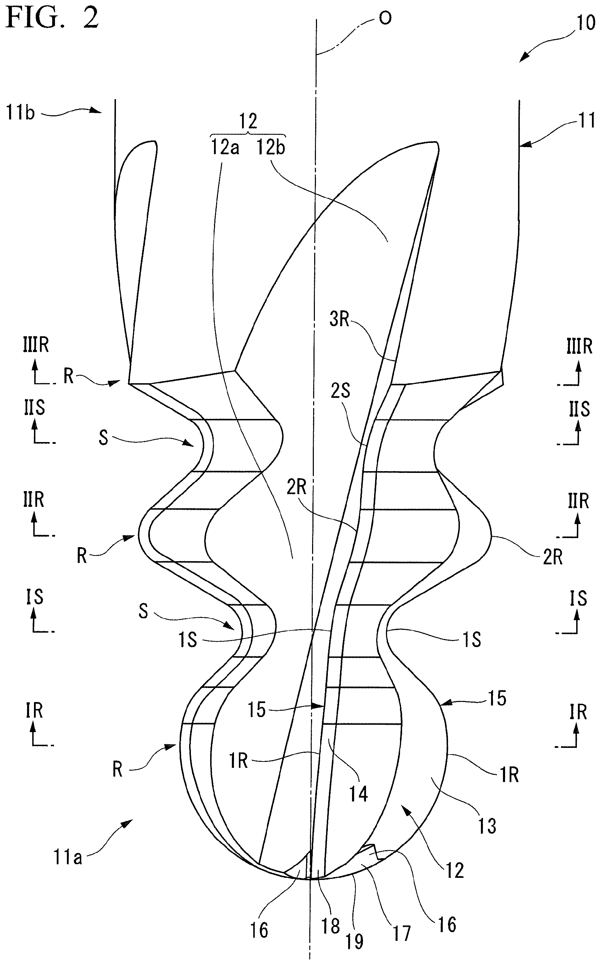

In the present specification, a direction in which the axis O of the end mill body 11 extends (a direction along the axis O) is referred to as the direction of the axis O. In the direction of the axis O, a direction (a lower side in FIG. 2) from the shank portion 11b to the cutting edge portion 11a is referred to as a direction toward a distal end, and a direction (an upper side in FIG. 2) from the cutting edge portion 11a to the shank portion 11b is referred to as a direction toward a posterior end.

Additionally, a direction orthogonal to the axis O is referred to as a radial direction. In the radial direction, an orientation approaching the axis O is referred to as a radial inner side, and an orientation away from the axis O is referred to as a radial outer side.

Additionally, a direction going around the axis O is referred to as a circumferential direction. In the circumferential direction, a direction in which the end mill body 11 is rotated at the time of cutting is referred to as the tool rotational direction T, and a direction opposite to this is referred to as an opposite to the tool rotational direction T (tool counter-rotational direction).

### [End mill body]

A chip discharge flute 12 extending gradually toward the opposite to the tool rotational direction T as it goes from the distal end toward the posterior end in the direction of the axis O is formed at an outer periphery of the end mill body 11. In the example of the present embodiment, a plurality of the chip discharge flutes 12 are provided at intervals in the circumferential direction at the outer periphery of the end mill body 11. In the end mill body 11, a region in the direction of the axis O where the chip discharge flutes 12 are arranged is the cutting edge portion 11a.

Additionally, the peripheral cutting edge 15 is formed at an intersection ridgeline between a wall surface of each chip discharge flute 12 that faces the tool rotational direction T, and an outer peripheral surface of the end mill body 11.

A smaller-diameter part S and a larger-diameter part R with a larger external diameter than the smaller-diameter part S are arranged adjacent to each other in the direction of the axis O in the cutting edge portion 11a of the end mill body 11. That is, a portion with a smaller external diameter (smaller-diameter part S) and a portion with a larger external diameter (larger-diameter part R) are formed side by side in the direction of the axis O in the end mill body 11 (cutting edge portion 11a). Additionally, the smaller-diameter part S and the larger-diameter part R adjacent to each other in the direction of the axis O are smoothly connected to each other, without forming a step therebetween.

Additionally, the peripheral cutting edge 15 located in the cutting edge portion 11a has smaller-diameter cutting parts 1S and 2S located in the smaller-diameter part S, and larger-diameter cutting parts 1R, 2R, and 3R located in the larger-diameter part R.

In the example of the present embodiment, a plurality of the smaller-diameter parts S and the larger-diameter parts R are respectively provided in the direction of the axis O in the end mill body 11. Accordingly, the peripheral cutting edge 15 has a plurality of the smaller-diameter cutting parts 1S and 2S, and a plurality of the larger-diameter cutting parts 1R, 2R, and 3R.

In addition, in the present embodiment, the larger-diameter part R closest to the distal end among the plurality of larger-diameter parts R in the cutting edge portion 11a is referred to as a first peak, a second larger-diameter part R located closer to the posterior end than the first peak is referred to as a second peak, a third larger-diameter part R located closer to the posterior end than the second peak is referred to as a third peak, and so on.

Additionally, a smaller-diameter part S closest to the distal end among the plurality of smaller-diameter parts S in the cutting edge portion 11a is referred to as a first valley, a second smaller-diameter part S located closer to the posterior end than the first valley is referred to as the second valley, and so on.

In the example shown in the present embodiment, the first peak, the first valley, the second peak, the second valley, and the third peak are arranged side by side in this order from the distal end of the end mill body 11 toward the posterior end. That is, the larger-diameter parts R and the smaller-diameter parts S have alternately arrayed in the direction of the axis O.

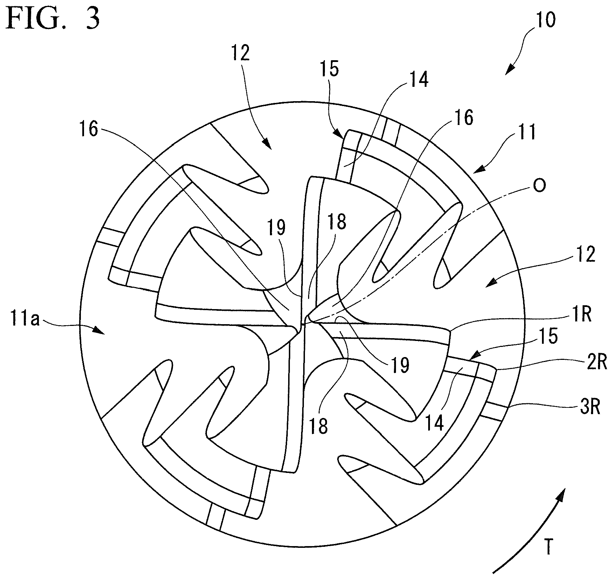

Additionally, as shown in FIG. 3, the external diameter of the second peak is larger than the external diameter of the first peak, and the external diameter of the third peak is larger than the external diameter of the second peak. Additionally, the external diameter of the second valley is larger than the external diameter of the first valley.

### [Chip discharge flute]

In FIGS. 1 to 3, each chip discharge flute 12 opens to a distal end surface of the end mill body 11, and extends to twist gradually in the tool counter-rotational direction as it goes from the distal end surface toward the posterior end. The chip discharge flute 12 is cut up to the outer periphery of the end mill body 11 at an end part of the cutting edge portion 11a on the posterior end.

In the formed end mill 10 of the present embodiment, the four chip discharge flutes 12 are formed at regular intervals in the circumferential direction. In addition, the chip discharge flutes 12 may be formed at irregular intervals in the circumferential direction.

In FIGS. 1 and 2, each chip discharge flute 12 has the wall surface that faces the tool rotational direction T, and portions of this wall surface adjacent to cutting edges (the peripheral cutting edge 15 and an end cutting edge 19) are rake faces. Specifically, among rake faces of a cutting edge, portions of this cutting edge adjacent to the peripheral cutting edge 15 and the end cutting edge 19 (to be described below) are a rake face 13 of the peripheral cutting edge 15 and a rake face 17 of the end cutting edge 19.

A gash 16 is formed at a distal end part of the chip discharge flute 12 such that this distal end part is cut out in a groove shape in the radial direction. In the present embodiment, four gashes 16 are formed corresponding to the four chip discharge flutes 12.

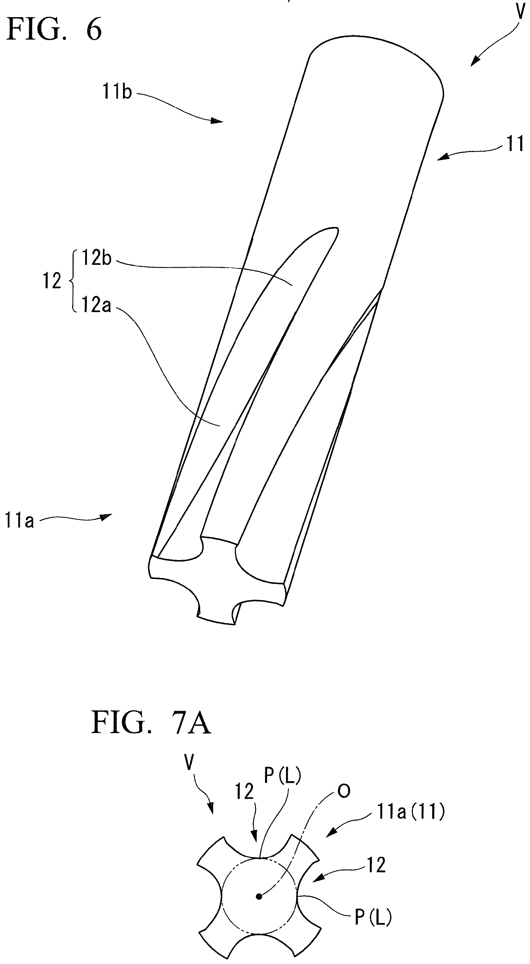

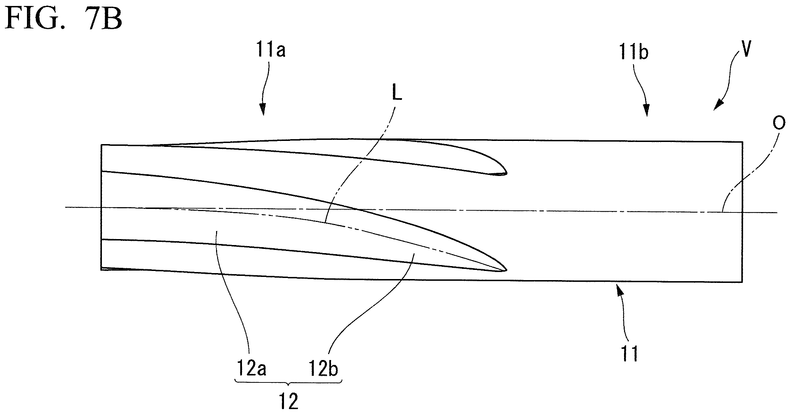

Here, an imaginary columnar body V obtained by cutting out the end mill body 11 of the formed end mill 10 of the present embodiment in a columnar shape in conformity with the external diameter of a smaller-diameter part (minimum diameter part) S with a smallest diameter (that is, with the external diameter that is constant in the direction of the axis O) is shown in FIGS. 6, 7A, and 7B.

By referring to the imaginary columnar body V, special technical features of the chip discharge flutes 12 of the present embodiment can be easily understood.

In FIG. 7B, a "virtual flute bottom line" is shown by symbol L.

The virtual flute bottom line L referred to in the present embodiment is an imaginary line shown in FIG. 7A, which is obtained by lining up a deepest point P of a flute bottom of a chip discharge flute 12 that appears in a sectional view (cross-sectional view) perpendicular to the axis O of the end mill body 11 in an extending direction of the chip discharge flute 12.

In FIG. 7B, in a side view when the end mill body 11 is seen from the radial direction orthogonal to the axis O, the angle of an acute angle out of the acute angle and an obtuse angle, which are formed between the virtual flute bottom line L and the axis O (or a linear line parallel to the axis O) is defined as a "flute helix angle". This flute helix angle is 0 degrees or more at the distal end part of the chip discharge flute 12 in the direction of the axis O, and increases gradually from this distal end part toward the posterior end in the direction of the axis O.

Specifically, the chip discharge flute 12 includes an unequal lead helical flute part 12a and an oblique cutting edge flute part 12b.

The unequal lead helical flute part 12a consists of a curvilinearly grooved unequal lead helical flute in which the flute helix angle becomes gradually larger from the distal end in the direction of the axis O toward the posterior end. The oblique cutting edge flute part 12b is lined up to the posterior end of the unequal lead helical flute part 12a in the direction of the axis O, and consists of a linearly grooved oblique cutting edge flute.

In addition, the "oblique cutting edge flute" referred to in the present embodiment is a flute formed by slidably moving a grinding stone in the extending direction of the chip discharge flute 12 with respect to the end mill body 11 without rotating the end mill body 11 around the axis O, when the chip discharge flute 12 is shaped by grinding at the time of manufacturing the end mill.

In the chip discharge flute 12, the virtual flute bottom line L of the unequal lead helical flute part 12a and the virtual flute bottom line L of the oblique cutting edge flute part 12b are smoothly connected to each other.

Additionally, the unequal lead helical flute part 12a of the chip discharge flute 12 extends from the distal end part in the direction of the axis O to at least a position exceeding the predetermined smaller-diameter cutting part 1S with a smallest external diameter among the plurality of smaller-diameter cutting parts 1S and 2S to the posterior end in the direction of the axis O (refer to FIG. 2).

In addition, in the example of the present embodiment, the unequal lead helical flute part 12a extends from the distal end part of the chip discharge flute 12 to the vicinity of a position exceeding the smaller-diameter cutting part 2S of the second valley toward the posterior end in the direction of the axis O beyond the smaller-diameter cutting part (minimum diameter) 1S of the first valley toward the posterior end in the direction of the axis O.

### [Cutting edge]

In FIGS. 1 to 3, the cutting edge portion 11a has a plurality of cutting edges at intervals in the circumferential direction. Each cutting edge is formed in each of the plurality of chip discharge flutes 12, and extends over an end edge on the radial outer side and an end edge on the distal end side in the wall surface (the wall surface that faces the tool rotational direction T) located on the opposite to the tool rotational direction T within each chip discharge flute 12.

The cutting edge has the peripheral cutting edge 15, and the end cutting edge 19 located closer to the distal end than the peripheral cutting edge 15, and these cutting edges are smoothly connected to each other so as to form one blade (ridgeline) continuously.

In the formed end mill 10 of the present embodiment, the cutting edge portion 11a has four blades (a configuration having four cutting edges). Here, the number of cutting edges of the formed end mill 10 (the number of sets of continuous peripheral cutting edge 15 and end cutting edge 19) is not limited to the four blades described in the present embodiment, and for example, may be equal to or less than three blades or may be equal to or more than five blades. In addition, the number of cutting edges corresponds to the number of chip discharge flutes 12.

### [Peripheral cutting edge]

The peripheral cutting edge 15 is formed at the intersection ridgeline between the wall surface of each chip discharge flute 12 that faces the tool rotational direction T, and an outer peripheral surface of the end mill body 11. The peripheral cutting edge 15 extends along an outer peripheral end edge of the wall surface of the chip discharge flute 12, and forms a concavo-convex shape (waveform shape).

In addition, the end cutting edge (tip cutting edge) 19 that is located at a distal end edge of each gash 16 and extends in the radial direction is not included in the peripheral cutting edge 15 referred to in the present embodiment. In other words, in a case where the gash 16 is not formed in the chip discharge flute 12, an entire cutting edge may be formed as the peripheral cutting edge 15.

The peripheral cutting edge 15 is formed at an intersection ridgeline between the rake face 13 and an outer peripheral flank face 14. The rake face 13 is located at an end part (also including a distal outer peripheral part) on the radial outer side in the wall surface of the chip discharge flute 12 that faces the tool rotational direction T. The outer peripheral flank face 14 is adjacent to the chip discharge flute 12 opposite to the tool rotational direction T in the outer peripheral surface of the cutting edge portion 11a.

The outer peripheral flank face 14 is formed between the chip discharge flutes 12 adjacent to each other in the circumferential direction in the outer peripheral surface of the cutting edge portion 11 a. The outer peripheral flank face 14 is formed such that the external diameter thereof increases or decreases gradually in the direction of the axis O (the radial position thereof varies on the outside and the inside).

The peripheral cutting edge 15 has at least one or more smaller-diameter cutting parts (symbols 1S and 2S) corresponding to the smaller-diameter part S of the end mill body 11, and at least one or more larger-diameter cutting parts (symbols 1R, 2R, and 3R) corresponding to the larger-diameter part R. In the example of the present embodiment, the two smaller-diameter cutting parts 1S and 2S and the three larger-diameter cutting parts 1R, 2R, and 3R are included in the peripheral cutting edge 15.

These cutting parts are arranged side by side in the order of the larger-diameter cutting part 1R, the smaller-diameter cutting part 1S, the larger-diameter cutting part 2R, the smaller-diameter cutting part 2S, and the larger-diameter cutting part 3R from the distal end of the end mill body 11 toward the posterior end in correspondence with an alignment sequence, in the direction of the axis O, of the smaller-diameter part S and the larger-diameter part R of the end mill body 11. Additionally, the external diameter and the concavo-convex shape of each cutting part correspond to the external diameter and the concavo-convex shape of the smaller-diameter part S and the larger-diameter part R of the end mill body 11.

Specifically, among the plurality of smaller-diameter parts S, a smaller-diameter cutting part located in the smaller-diameter part S of the first valley is expressed by symbol 1S, and a smaller-diameter cutting part located in the smaller-diameter part S of the second valley is expressed by symbol 2S. Additionally, among the plurality of larger-diameter parts R, a larger-diameter cutting part located in the larger-diameter part R of the first peak is expressed by symbol 1R, a larger-diameter cutting part located in the larger-diameter part R of the second peak is expressed by symbol 2R, and a larger-diameter cutting part located in the larger-diameter part R of the third peak is expressed by symbol 3R.

In the side view (refer to FIG. 2) when the end mill body 11 is seen from the radial direction, an angle of an acute angle out of the acute angle and an obtuse angle, which are formed between the peripheral cutting edge 15 and the axis O (or a linear line parallel to the axis O), is defined as a "cutting edge inclination angle". The cutting edge inclination angle of the smaller-diameter cutting part 1S of the first valley arranged adjacent to the posterior end of the larger-diameter cutting part 1R in the direction of the axis O is made larger than the cutting edge inclination angle of the larger-diameter cutting part 1R of the first peak closest to the distal end in the direction of the axis O among the smaller-diameter cutting parts I S and 2S and the larger-diameter cutting parts 1R to 3R.

Moreover, the cutting edge inclination angle of the larger-diameter cutting part 2R of the second peak arranged adjacent to the posterior end of the smaller-diameter cutting part 1S is made larger than the cutting edge inclination angle of the smaller-diameter cutting part 1S of the first valley.

Additionally, the cutting edge inclination angle of the smaller-diameter cutting part 2S of the second valley arranged adjacent to the posterior end of the larger-diameter cutting part 2R is not made smaller than the cutting edge inclination angle of the larger-diameter cutting part 2R of the second peak. In the example of the present embodiment, the cutting edge inclination angle of the larger-diameter cutting part 2R of the second peak and the cutting edge inclination angle of the smaller-diameter cutting part 2S of the second valley are the same angles.

Additionally, the cutting edge inclination angle of the larger-diameter cutting part 3R of the third peak arranged adjacent to the posterior end of this smaller-diameter cutting part 2S is not made smaller than the cutting edge inclination angle of the smaller-diameter cutting part 2S of the second valley. In the example of the present embodiment, the cutting edge inclination angle of the smaller-diameter cutting part 2S of the second valley and the cutting edge inclination angle of the larger-diameter cutting part 3R of the third peak are the same angles.

In addition, the "cutting edge inclination angle" of each of the larger-diameter cutting parts 1R, 2R, and 3R and the smaller-diameter cutting parts 1S and 2S is equal to an inclination angle (an acute angle out of the acute angle and an obtuse angle) obtained when a predetermined cutting part (any one of 1R, 2R, 3R, 1S, and 2S) is made to intersect on the axis O by appropriately rotating of the end mill body 11 around the axis O in the side view shown in FIG. 2. The cutting edge inclination angle is equivalent to a so-called "helix angle".

Additionally, in respective cross-sectional view (respective cross-sectional views including the cutting parts 1R, 1S, 2R, 2S, and 3R) of the end mill body 11 shown in FIGS. 4A to 4C, 5A, and 5B, a radial rake angle θ (peripheral rake angle) of the peripheral cutting edge 15 is within a range of 0 degrees or more and 15 degrees or less. That is, also in any cross-sectional views of the end mill body 11 in which the peripheral cutting edge 15 appears, the radial rake angle θ of the peripheral cutting edge 15 is set to a positive angle side.

Here, the "radial rake angle θ of the peripheral cutting edge 15" referred to in the present embodiment is angles shown by symbol θ in FIGS. 4A to 4C, 5A, and 5B. Specifically, the radial rake angle θ of the peripheral cutting edge 15 indicates the angle of an acute angle out of the acute angle and an obtuse angle, which are formed between a predetermined radial direction D (equivalent to a so-called "tool reference plane") passing through the peripheral cutting edge 15 in the radial direction orthogonal to the axis O and the rake face 13 (a wall surface portion of the chip discharge flute 12 adjacent to the peripheral cutting edge 15, which faces the tool rotational direction T) of the peripheral cutting edge 15, in a cross-sectional view perpendicular to the axis O of the end mill body 11.

Additionally, the radial rake angle θ being the positive angle is an angle θ when the rake face 13 of the peripheral cutting edge 15 extends in an inclined manner in the tool rotational direction T toward the radial outer side in the cross-sectional view of the end mill body 11. In addition, in this case, the rake face 13 of the peripheral cutting edge 15 is arranged on the side (tool counter-rotational direction) opposite to the tool rotational direction T with respect to the above predetermined radial direction D (tool reference plane).

Specifically, a radial rake angle θ in a cross-sectional view of the end mill body 11 in which the smaller-diameter cutting part 1S of the first valley appears as shown in FIG. 4B is made larger than a radial rake angle θ in a cross-sectional view of the end mill body 11 in which the larger-diameter cutting part 1R of the first peak appears as shown in FIG. 4A.

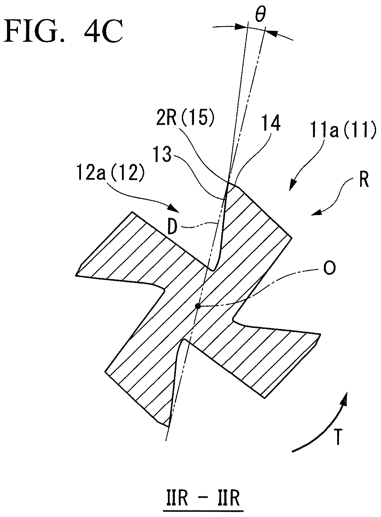

Additionally, a radial rake angle θ in a cross-sectional view of the end mill body 11 in which the larger-diameter cutting part 2R of the second peak appears as shown in FIG. 4C is not made smaller than the radial rake angle θ in the cross-sectional view of the end mill body 11 in which the smaller-diameter cutting part 1S of the first valley appears as shown in FIG. 4B. In the example of the present embodiment, the radial rake angle θ of the smaller-diameter cutting part 1S of the first valley and the radial rake angle θ of the larger-diameter cutting part 2R of the second peak are the same angles.

Additionally, the radial rake angle θ in the cross-sectional view of the end mill body 11 in which the smaller-diameter cutting part 2S of the second valley appears as shown in FIG. 5A is made larger than the radial rake angle θ in the cross-sectional view of the end mill body 11 in which the larger-diameter cutting part 2R of the second peak appears as shown in FIG. 4C.

Additionally, a radial rake angle θ in a cross-sectional view of the end mill body 11 in which the larger-diameter cutting part 3R of the third peak appears as shown in FIG. 5B is made smaller than a radial rake angle 0 in a cross-sectional view of the end mill body 11 in which the smaller-diameter cutting part 2S of the second valley appears as shown in FIG. 5A.

### [End cutting edge (tip cutting edge)]

As shown in FIGS. 1 to 3, the end cutting edge 19 is formed at the intersection ridgeline between the wall surface, which faces the tool rotational direction T, in the gash 16 of the chip discharge flute 12, and the distal end surface of the end mill body 11. In the example of the present embodiment, the end cutting edge 19 extends in a convexly curved shape along the distal end edge of the wall surface of the gash 16.

Specifically, the end cutting edge 19 is formed at the intersection ridgeline between the rake face 17 and a distal end flank face 18. The rake face 17 is located at a distal end part in the wall surface of the gash 16 that faces the tool rotational direction T. The distal end flank face 18 is adjacent to the gash 16 opposite to the tool rotational direction T in a distal end surface of the cutting edge portion 11a.

The distal end flank face 18 is formed between the chip discharge flutes 12 adjacent to each other in the circumferential direction in the distal end surface of the cutting edge portion 11a.

In the present embodiment, in a front view of the end mill body 11 shown in FIG. 3 (when the distal end surface of the end mill body 11 is seen from the axis O to the front), the end cutting edge 19 extends in the radial direction.

As shown in FIG. 2, the rake angle (substantially equivalent to an axial rake angle) of the end cutting edge 19 is set to a negative angle near 0 degrees, or 0 degrees. That is, the rake face 17 of the end cutting edge 19 is inclined gradually toward the tool rotational direction T as it goes from the distal end (end cutting edge 19) toward the posterior end or may be formed so as to become parallel to the axis O.

In addition, the rake angle of the end cutting edge 19 may be set to a positive angle. In this case, the rake face 17 of the end cutting edge 19 is inclined gradually toward the opposite to the tool rotational direction T as it goes from the distal end toward the posterior end.

### [Working effects according to present embodiment]

According to the formed end mill 10 of the present embodiment described above, in the side view when the end mill body 11 is seen from the radial direction orthogonal to the axis O, the "flute helix angle" that is the angle of an acute angle out of the acute angle and an obtuse angle, which are formed between the virtual flute bottom line L extending along the flute bottom of the chip discharge flute 12 and the axis O (or the linear line parallel to the axis O) is 0 degrees or more in the distal end part of the chip discharge flute 12. For this reason, the cutting edge inclination angle of the peripheral cutting edge 15 can be set to the positive angle side in the smaller-diameter cutting part or larger-diameter cutting part (larger-diameter cutting part 1R in the present embodiment) closest to the distal end in the peripheral cutting edge 1 5.

The flute helix angle of the chip discharge flute 12 increases gradually from the distal end part of the chip discharge flute 12 toward the posterior end in the direction of the axis O. That is, the chip discharge flute 12 includes the unequal lead helical flute in which the flute helix angle becomes gradually larger from the distal end in the direction of the axis O toward the posterior end.

The formed end mill 10 of the present embodiment exhibits the following remarkable effects by including such a special configuration.

That is, in the smaller-diameter cutting part 1S of the first valley (a first smaller-diameter part S from the distal end) located closer to the posterior end than the larger-diameter cutting part 1R of the first peak (a first larger-diameter part R from the distal end) closest to the distal end in the end mill body 11, the cutting edge inclination angle can be easily set large (large to the positive angle side). Therefore, a situation where the sharpness of the peripheral cutting edge 15 decreases in the smaller-diameter cutting part 1S more than in the larger-diameter cutting part 1R can be avoided, and occurrences of wear, breakage, or the like in the smaller-diameter cutting part 1S can be markedly reduced. Additionally, as the entire peripheral cutting edge 15, it is possible to limit variations and deviations of the cutting force.

In addition, in the present embodiment, the same effects as above are obtained also in the larger-diameter cutting part 2R of the second peak and the smaller-diameter cutting part 2S of the second valley.

Additionally, when the chip discharge flute 12 is shaped by grinding at the time of manufacturing the end mill, a desired shape can be imparted through a single grinding process.

Moreover, when the chip discharge flute 12 is grounded, it is possible to bring the grindstone swing angle of a grinding stone close to the flute helix angle of the chip discharge flute 12 or it is possible to make the grindstone swing angle equal to the flute helix angle. For this reason, as shown in FIGS. 4A to 4C, 5A, and 5B, the wall surface (the rake face 13 of the peripheral cutting edge 15) of the chip discharge flute 12 that faces the tool rotational direction T forms a concavely curved shape with a small curvature (a large curvature radius) or a linear shape in the sectional view (cross-sectional view) perpendicular to the axis O of the end mill body 11.

Accordingly, the radial rake angle θ of the peripheral cutting edge 15 becomes an approximated angle that is not greatly different between the smaller-diameter cutting part and the larger-diameter cutting part adjacent to each other in the direction of the axis O. That is, the radial rake angle θ of the smaller-diameter cutting part can be prevented from becoming excessively larger to a negative angle side than the radial rake angle 0 of the larger-diameter cutting part as in the related art. In the entire peripheral cutting edge 15 (the smaller-diameter cutting part and the larger-diameter cutting part), the radial rake angle θ can be easily set to the positive angle side.

Therefore, a situation where the sharpness of the peripheral cutting edge 15 decreases in the smaller-diameter cutting part more than in the larger-diameter cutting part can be avoided, and occurrences of wear, breakage, or the like in the smaller-diameter cutting part can be markedly reduced. Additionally, as the entire peripheral cutting edge 15, it is possible to reduce variations and deviations of the cutting force.

From above, according to the present embodiment, both the sharpness of the smaller-diameter cutting part and the larger-diameter cutting part of the peripheral cutting edge 15 can be enhanced without complicating the manufacturing processes at the time of manufacturing the end mill, and wear, breakage, or the like of the peripheral cutting edge 15 can be effectively reduced. Accordingly, the tool lifespan can be extended.

Additionally, in the present embodiment, the cutting edge inclination angle is made larger (larger to the positive angle side) in the smaller-diameter cutting part 1S of the first valley arranged adjacent to the posterior end than the larger-diameter cutting part 1R of the first peak closest to the distal end. Therefore, a situation where sharpness decreases particularly in the smaller-diameter cutting part 1S closest to the distal end in the peripheral cutting edge 15 can be avoided. Accordingly, occurrences of wear, breakage, or the like in the smaller-diameter cutting part 1S of the first valley closest to the distal end where wear, breakage, or the like is most likely to occur in the related art is especially and markedly reduced.

Additionally, in the present embodiment, since the radial rake angle θ of the peripheral cutting edge 15 is 0 degrees or more and 15 degrees or less, the following effects are exhibited.

That is, in this case, irrespective of the smaller-diameter cutting part and the larger-diameter cutting part, the radial rake angle θ of the peripheral cutting edge 15 is 0 degrees or more over the entire peripheral cutting edge 15, and is set to the positive angle side. Accordingly, sharpness is enhanced over the entire peripheral cutting edge 15. In the related art, the radial rake angle θ tended to be set to the negative angle side in the smaller-diameter cutting part 1S of the first valley closest to the distal end. Meanwhile, according to the formed end mill 10 of the present embodiment, the radial rake angle θ is set to the positive angle side also in the smaller-diameter cutting part 1S of the first valley. Thus, sharpness is sufficiently enhanced. Therefore, particularly, occurrences of wear, breakage, or the like at the smaller-diameter cutting part 1S of this first valley are especially and markedly reduced.

Additionally, since the radial rake angle θ of the peripheral cutting edge 15 is 15 degrees or less, the edge tip strength of the peripheral cutting edge 15 and the rigidity of the end mill body 11 can also be sufficiently secured while sufficiently enhancing sharpness as described above.

Additionally, in the present embodiment, the chip discharge flute 12 includes the unequal lead helical flute part 12a and the oblique cutting edge flute part 12b lined up to the posterior end of the unequal lead helical flute part 12a in the direction of the axis O. Since the virtual flute bottom line L of the unequal lead helical flute part 12a and the virtual flute bottom line L of the oblique cutting edge flute part 12b are smoothly connected to each other, the following working effects are exhibited.

That is, in this case, when the chip discharge flute 12 is shaped by grinding at the time of manufacturing the end mill, the unequal lead helical flute part 12a is first formed from the distal end of the chip discharge flute 12 toward the posterior end by a grinding stone. In this grinding process (the same process), the oblique cutting edge flute part 12b is formed subsequent to the posterior end of the unequal lead helical flute part 12a. Accordingly, the chip discharge flute 12 of the present embodiment can be easily shaped in a single grinding process. Additionally, the grooved shape of the chip discharge flute 12 can be finished with good external appearance.

Additionally, in the present embodiment, the peripheral cutting edge 15 has the plurality of smaller-diameter cutting parts. Since the unequal lead helical flute part 12a of the chip discharge flute 12 extends from the distal end part in the direction of the axis O to at least the position exceeding the predetermined smaller-diameter cutting part 1S with the smallest external diameter among the plurality of smaller-diameter cutting parts 1S and 2S to the posterior end in the direction of the axis O, the following working effects are exhibited.

That is, in this case, in the predetermined smaller-diameter cutting part 1S with the smallest external diameter among the plurality of smaller-diameter cutting parts 1S and 2S, the working effects of the above-described present embodiment are reliably obtained. That is, in the predetermined (minimum diameter) smaller-diameter cutting part 1S in which it is most difficult to secure sharpness in the related art and wear, breakage, or the like is most likely to occur, among the plurality of smaller-diameter cutting parts 1S and 2S, sharpness is reliably enhanced by the above configuration of the present embodiment, and wear, breakage, or the like can be effectively reduced.

### <Second Embodiment>

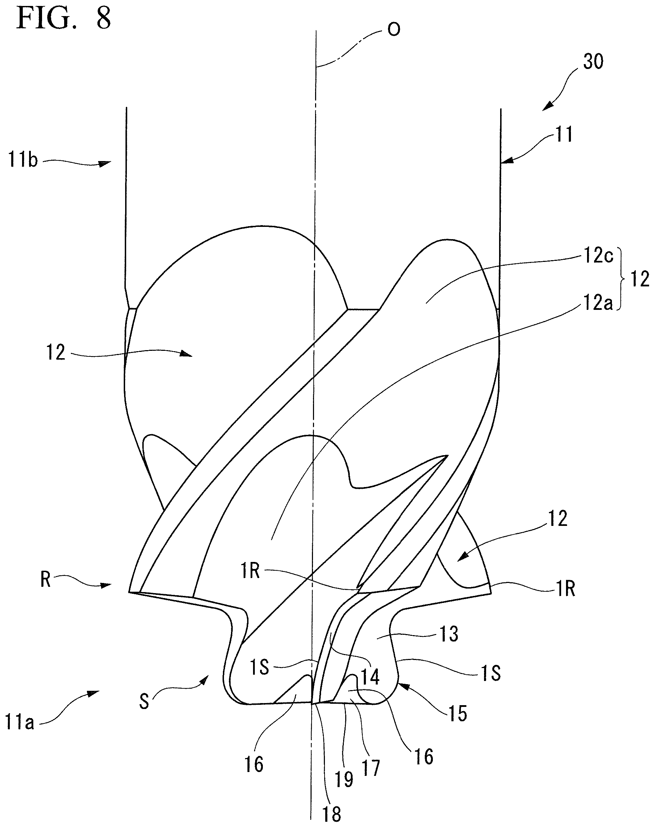

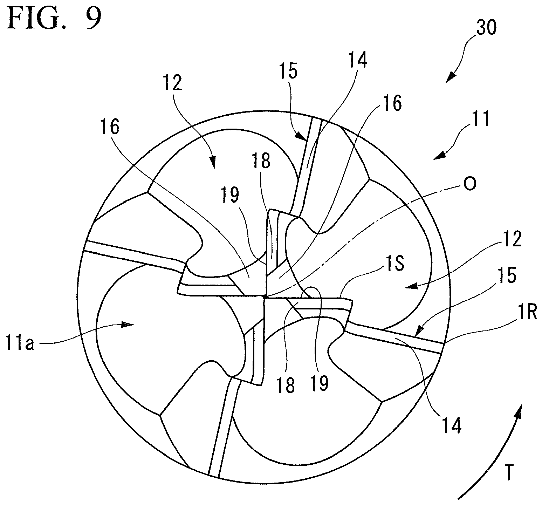

Next, a formed end mill 30 related to a second embodiment of the invention will be described with reference to FIGS. 8 and 9.

In addition, detailed description regarding the same constituent elements as those of the aforementioned embodiment will be omitted, and only differences will mainly be described below.

### [Differences from aforementioned embodiment]

As shown in FIGS. 8 and 9, in the formed end mill 30 of the present embodiment, one smaller-diameter part S and one larger-diameter part R are provided adjacent to each other in the direction of the axis O in the cutting edge portion 11a of the end mill body 11. Additionally, the first valley (smaller-diameter part) and the first peak (larger-diameter part) are arranged side by side in this order from the distal end of the end mill body 11 toward the posterior end.

Additionally, the smaller-diameter cutting part and larger-diameter cutting part of the peripheral cutting edge 15 are arranged side by side in the order of the smaller-diameter cutting part 1S and the larger-diameter cutting part 1R from the distal end of the end mill body 11 toward the posterior end in correspondence with an alignment sequence, in the direction of the axis O, of the smaller-diameter part S and the larger-diameter part R of the end mill body 11.

The cutting edge inclination angle of the larger-diameter cutting part 1R of the first peak arranged adjacent to the posterior end of the smaller-diameter cutting part 1S in the direction of the axis O is made larger than the cutting edge inclination angle of the smaller-diameter cutting part 1S of the first valley.

Additionally, the chip discharge flute 12 of the present embodiment includes the unequal lead helical flute part 12a and an equal lead helical flute part 12c.

The unequal lead helical flute part 12a consists of an unequal lead helical flute in which the flute helix angle becomes gradually larger from the distal end in the direction of the axis O toward the posterior end. The equal lead helical flute part 12c is lined up to the posterior end of the unequal lead helical flute part 12a in the direction of the axis O, and consists of an equal lead helical flute with a constant flute helix angle.

That is, in the present embodiment, the equal lead helical flute part 12c is provided on the posterior end side of the unequal lead helical flute part 12a in the direction of the axis O, instead of the oblique cutting edge flute part 12b described in the aforementioned embodiment.

The flute helix angle of (the unequal lead helical flute part 12a of) the chip discharge flute 12 is 0 degrees or more at the distal end part of the chip discharge flute 12 in the direction of the axis O, and increases gradually from this distal end part toward the posterior end in the direction of the axis O.

Additionally, the radial rake angle θ of the peripheral cutting edge 15 is within a range of 0 degrees or more and 15 degrees or less.

Additionally, in the side view of the end mill body 11 shown in FIG. 8, the end cutting edge 19 gradually extends toward the posterior end in the direction of the axis O as it goes from an outer end (an end edge on the radial outer side) of the end cutting edge toward the radial inner side. Therefore, a rotation locus formed by the end cutting edge 19 being rotated around the axis O becomes a conical surface (tapered surface) that is inclined toward the posterior end in the direction of the axis O gradually as it goes from the outer end of the end cutting edge 19 toward the radial inner side.

In addition, the end cutting edge 19 may extend so as to be included in a plane perpendicular to the axis O. In this case, the rotation locus of the end cutting edge 19 becomes the plane perpendicular to the axis O.

Also in the formed end mill 30 of the present embodiment, the same excellent effects as those of the aforementioned embodiment are exhibited.

### [Other configurations included in the invention]

In addition, the invention is not limited to the aforementioned embodiments, and various changes can be made without departing from the scope of the invention.

For example, the shape of the cutting edge portion 11a of the end mill body 11 is variously set according to a desired special shape obtained by cutting a workpiece, and is not limited to that described in the aforementioned embodiments. For this reason, the number, external diameter, concavo-convex shape, and arrangement of smaller-diameter cutting parts and larger-diameter cutting parts in the peripheral cutting edge 15 are also not limited to the aforementioned embodiments.

In addition, the respective components (constituent elements) described in the aforementioned embodiments, modification examples, rewritings and the like may be combined without departing from the concept of the invention, and additions, omissions, substitutions, and other modifications of components can be made. Additionally, the invention is not to be considered as being limited by the aforementioned embodiments, and is limited only by the scope of the claims.

### [Examples]

Hereinafter, the invention will be more specifically described by means of an example. However, the invention is not limited to this example.

### [Cutting test]

As an example of the invention, the formed end mill 10 of the aforementioned first embodiment is prepared. Additionally, one in which an entire chip discharge flute becomes an equal lead helical flute was prepared as Comparative Example 1 of the related art. Additionally, one in which an entire chip discharge flute becomes an oblique cutting edge flute was prepared as Comparative Examples 2 and 3. In addition, in the respective formed end mills, arrangement patterns of the smaller-diameter cutting parts and larger-diameter cutting parts were the same, and the external diameter of the larger-diameter cutting part 1R of the first peak was 10 mm.

Specifications of the radial rake angle θ and the cutting edge inclination angle (helix angle) in respective cutting parts (smaller-diameter cutting parts and larger-diameter cutting parts) of peripheral cutting edges of these formed end mills are shown in the following Table 1.

**[Table 1]**

| | | Larger-diameter cutting part 1R of first peak | Smaller-diameter cutting part 1S of first valley | Larger-diameter cutting part 2R of second peak | Smaller-diameter cutting part 2S of second valley | Larger-diameter cutting part 3R of third peak |
|---|---|---|---|---|---|---|
| Example | Radial rake angle θ | 1° | 7° | 7° | 15° | 14° |
| | Cutting edge inclination angle | 5° | 7° | 12° | 12° | 12° |
| Comparative Example 1 | Radial rake angle θ | 6° | -8° | 14° | 7° | 21° |
| | Cutting edge inclination angle | 5° | 3° | 7° | 5° | 8° |
| Comparative Example 2 | Radial rake angle θ | 4° | 15° | 11° | 19° | 15° |
| | Cutting edge inclination angle | 6° | 6° | 6° | 6° | 6° |
| Comparative Example 3 | Radial rake angle θ | 2° | 12° | 7° | 15° | 11° |
| | Cutting edge inclination angle | 4° | 4° | 4° | 4° | 4° |

It was confirmed that trochoid grooving of workpieces was continuously performed using these formed end mills, and the number of machined grooves until the formed end mills are incapable of cutting (the lifespan of the tools) due to breakage or the like. In addition, cutting conditions or the like were as follows.
Workpiece: Ni-based alloy
Cutting speed: 50 m/min
Feed per tooth: 0.07 mm/tooth
Depth of cut: 0.2 mm

As a result of the test, in the example of the invention, machining was possible with steady wear (quantitative gentle wear) up to a fortieth groove. Additionally, after the fortieth groove, minute chipping occurred in the peripheral cutting edge 15 and damage grew. However, breakage was not reached even if machining was performed up to a sixtieth groove.

Meanwhile, in Comparative Example 1, the formed end mill was broken during machining of a first groove. This is probably because the radial rake angle θ of the smaller-diameter cutting part 1S of the first valley is a negative angle, and the cutting force became excessively high in this portion.

Additionally, in Comparative Example 2, the second valley was greatly broken after a first groove was machined. This is probably because the radial rake angle θ of the smaller-diameter cutting part 2S of the second valley was excessively large to the positive angle side and the edge tip strength could not be secured.

Additionally, in Comparative Example 3, the formed end mill was broken machining a sixteenth groove. In Comparative Example 3, the radial rake angle θ falls within a range of 0 degrees or more and 15 degrees or less similar to the example. However, since the cutting edge inclination angle is small, it is considered that the cutting force became high.

### Industrial Applicability

According to the formed end mill of the invention, both the sharpness of the smaller-diameter cutting part and the larger-diameter cutting part of the peripheral cutting edge can be enhanced without complicating the manufacturing processes at the time of manufacturing the end mill, and wear, breakage, or the like of the peripheral cutting edge can be effectively reduced. Therefore, the invention has industrial applicability.

### Reference Signs List

- 1R:: LARGER-DIAMETER CUTTING PART OF FIRST PEAK
- 1S:: SMALLER-DIAMETER CUTTING PART OF FIRST VALLEY
- 2R:: LARGER-DIAMETER CUTTING PART OF SECOND PEAK
- 2S:: SMALLER-DIAMETER CUTTING PART OF SECOND VALLEY
- 3R:: LARGER-DIAMETER CUTTING PART OF THIRD PEAK
- 10, 30:: FORMED END MILL
- 11:: END MILL BODY
- 12:: CHIP DISCHARGE FLUTE
- 12a:: UNEQUAL LEAD HELICAL FLUTE PART
- 12b:: OBLIQUE CUTTING EDGE FLUTE PART
- 13:: RAKE FACE OF PERIPHERAL CUTTING EDGE
- 14:: OUTER PERIPHERAL FLANK FACE
- 15:: PERIPHERAL CUTTING EDGE
- D:: PREDETERMINED RADIAL DIRECTION
- L:: VIRTUAL FLUTE BOTTOM LINE
- O:: AXIS
- P:: DEEPEST POINT
- R:: LARGER-DIAMETER PART
- S:: SMALLER-DIAMETER PART
- T:: TOOL ROTATIONAL DIRECTION
- θ:: RADIAL RAKE ANGLE OF PERIPHERAL CUTTING EDGE

## Claims

1. A formed end mill comprising:
an end mill body that has a smaller-diameter part and a larger-diameter part with a larger external diameter than the smaller-diameter part arranged adjacent to each other in an axial direction and is rotated around an axis;
a chip discharge flute that is formed at an outer periphery of the end mill body and extends gradually toward an opposite to a tool rotational direction around the axis as it goes from a distal end toward a posterior end in the axial direction; and
a peripheral cutting edge that is formed at an intersection ridgeline between a wall surface of the chip discharge flute that faces the tool rotational direction, and an outer peripheral surface of the end mill body,
wherein the peripheral cutting edge has
a smaller-diameter cutting part located in the smaller-diameter part, and
a larger-diameter cutting part located in the larger-diameter part,
wherein an imaginary line obtained by lining up a deepest point of a flute bottom of the chip discharge flute, which appears in a cross-sectional view perpendicular to the axis of the end mill body, in an extending direction of the chip discharge flute is defined as a virtual flute bottom line,
wherein an angle of an acute angle out of the acute angle and an obtuse angle formed between the virtual flute bottom line and the axis, in a side view when the end mill body is seen from a radial direction orthogonal to the axis, is defined as a flute helix angle, and
wherein the flute helix angle is 0 degrees or more at a distal end part of the chip discharge flute in the axial direction, and increases gradually from the distal end part toward a posterior end in the axial direction.

2. The formed end mill according to Claim 1,
wherein the peripheral cutting edge has at least one or more smaller-diameter cutting parts and at least one or more larger-diameter cutting parts,
wherein an angle of an acute angle out of the acute angle and an obtuse angle formed between the peripheral cutting edge and the axis, in the side view when the end mill body is seen from the radial direction orthogonal to the axis, is defined as a cutting edge inclination angle, and
wherein the cutting edge inclination angle of the smaller-diameter cutting part arranged adjacent to the posterior end of the larger-diameter cutting part in the axial direction is made larger than a cutting edge inclination angle of the larger-diameter cutting part located closest to a distal end in the axial direction out of the smaller-diameter cutting part and the larger-diameter cutting part.

3. The formed end mill according to Claim 1 or 2,
wherein an angle of an acute angle out of the acute angle and an obtuse angle, which are formed between a predetermined radial direction passing through the peripheral cutting edge in the radial direction orthogonal to the axis, and a wall surface portion of the chip discharge flute adjacent to the peripheral cutting edge, which faces the tool rotational direction, in a cross-sectional view perpendicular to the axis of the end mill body, is defined as a radial rake angle of the peripheral cutting edge, and
wherein the radial rake angle of the peripheral cutting edge is 0 degrees or more and 15 degrees or less.

4. The formed end mill according to any one of Claims 1to 3,
wherein the chip discharge flute includes:
a curvilinearly grooved unequal lead helical flute part in which the flute helix angle becomes gradually larger from the distal end toward the posterior end in the axial direction, and
a linearly grooved oblique cutting edge flute part lined up to a posterior end of the unequal lead helical flute part in the axial direction,
wherein the virtual flute bottom line of the unequal lead helical flute part and the virtual flute bottom line of the oblique cutting edge flute part are smoothly connected to each other.

5. The formed end mill according to Claim 4,
wherein the peripheral cutting edge has a plurality of the smaller-diameter cutting parts, and
wherein the unequal lead helical flute part of the chip discharge flute extends from the distal end part in the axial direction to at least a position exceeding a predetermined smaller-diameter cutting part with a smallest external diameter among a plurality of the smaller-diameter cutting parts to the posterior end in the axial direction.
